# EUROPEAN PATENT SPECIFICATION

(11) **EP 3 466 289 B1**
(45) Date of publication and mention of the grant of the patent: **07.10.2020**
(21) Application number: 18190830.2
(22) Date of filing: 24.08.2018
(51) Int. Cl.: A43B 5/00, A43B 13/04, A43B 13/14, C08L 23/22

(54) **CHEMICAL COMPOSITION FOR THE MANUFACTURE OF CLIMBING SHOE SOLES**
CHEMISCHE ZUSAMMENSETZUNG ZUR HERSTELLUNG VON KLETTERSCHUHSOHLEN
COMPOSITION CHIMIQUE POUR LA FABRICATION DE SEMELLES DE CHAUSSURES D'ESCALADE

(30) Priority: 04.10.2017 IT 201700111150
(43) Date of publication of application: 10.04.2019
(73) Proprietor: JV International S.r.l., 20122 Milano (IT)
(72) Inventor: MERLO, Ambrogio, 20122 Milano (IT)
(74) Representative: Feltrinelli, Secondo Andrea

(56) References cited:
- EP-A1- 0 688 512
- US-A1- 2013 086 822

## Description

### TECHNICAL FIELD OF THE INVENTION

The present invention regards a chemical composition, in particular for obtaining footwear soles, in particular soles for climbing footwear or shoes.

### STATE OF THE PRIOR ART

Climbing soles are usually obtained starting from a rubber strip, which is suitably cut and folded, possibly stitching or joining several pieces to each other so as to obtain the main body of the sole.

This obviously entails extremely long production times, basically with the impossibility to industrialize the production method as well as high manufacturing costs due to the necessarily entailed waste or residual materials.

US2013086822A1 and EP0688512A1 disclose solutions according to the prior state of the art.

### OBJECTS OF THE INVENTION

An object of the present invention is to provide a new chemical composition, in particular for manufacturing soles for footwear, in particular climbing footwear.

Another object of the present invention is to provide a chemical composition that allows obtaining footwear soles in a more efficient, quick and simple manner with respect to the compositions currently in use.

Another object of the present invention is to provide a new climbing footwear sole.

Another object of the present invention is to provide a climbing footwear sole that is resistant and such to guarantee climbing in a quick and safe manner.

According to an aspect of invention a composition according to claim 1 is provided for.

According to an aspect of invention, a sole according to claim 4 is provided for.

The dependent claims refer to preferred and advantageous embodiments of the invention.

### BRIEF DESCRIPTION OF THE DRAWINGS

Other characteristics and advantages of the invention will be more apparent from the description of embodiments of a sole and a footwear, illustrated by way of example in the attached drawings wherein:

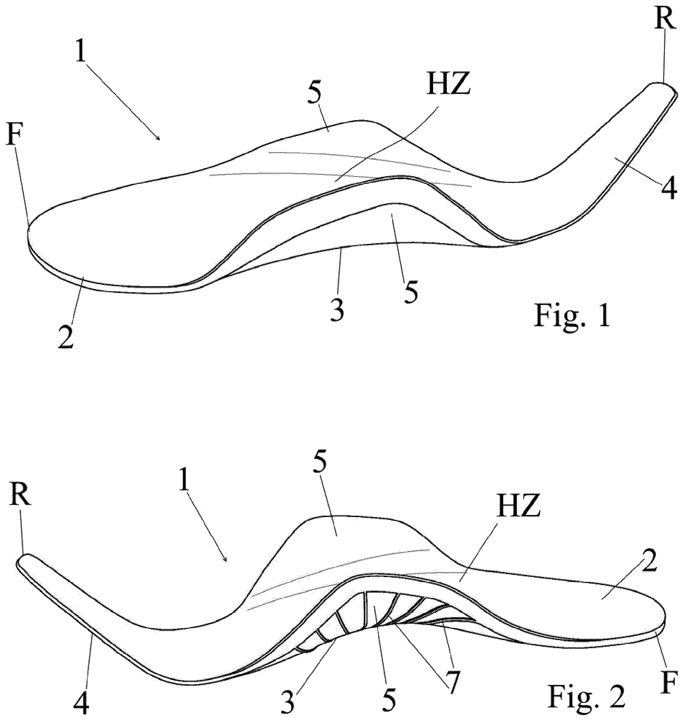

- figures 1 and 2 are lateral views of a sole according to the present invention;

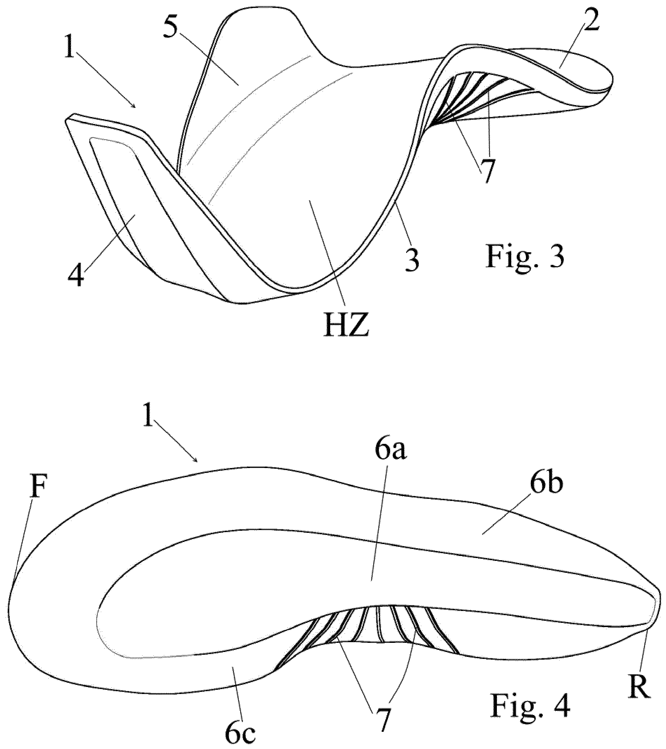

- figure 3 is a perspective view - slightly from the back and from the top - of the sole of figure 1;
- figure 4 is a bottom view of the sole of figure 1; and
- figure 5 is a perspective view - slightly from the top - of a footwear according to the present invention with the sole of figure 1.

In the attached drawings, identical parts or components are indicated using the same reference numbers.

### EMBODIMENTS OF THE INVENTION

The present invention regards a chemical composition or compound comprising the following components:
- butyl rubber in a percentage variable between 45% and 60% by weight on the total weight of the composition, for example between 45% and 50% or between 51% and 55% or between 56% and 60%;
- carbon black in a percentage variable between 20% and 35% by weight on the total weight of the composition, for example between 20% and 25% or between 26% and 30% or between 31% and 35%;
- silica in a percentage variable between 8% and 15% by weight on the total weight of the composition, for example between 8% and 11% or between 12% and 15%;
- dibenzothiazol-2yl disulphide in a percentage variable between 0.02% and 0.06% by weight of the total weight of the composition;
- 3-triethoxysilylpropyl thiocyanate in a percentage variable between 0.5% and 2% by weight of the total weight of the composition; and
- a mixture of aliphatic hydrocarbon resins in a percentage variable between 0.03% and 1% by weight of the total weight of the composition, for example a mixture of light aliphatic hydrocarbon resins, with tone ranging from white to beige.

Furthermore, the composition comprises fillers, such as calcium, boron, added up to obtaining 100% by weight of the total weight of the composition.

The use of the aforementioned composition to obtain a climbing footwear sole or a part of such sole is also an object of the present invention.

A climbing footwear sole or part of a climbing footwear sole obtained in a single piece through a step for moulding a composition as outlined above in a mould is also an object of the present invention.

With reference to the attached figures, herein illustrated is a sole 1 according to the present invention, comprising from front F to rear R, a substantially flat front section 2, then a slightly curved intermediate section 3 with a concavity facing downwards and lastly a rear section 4 upwardly extending starting from the rear end of the intermediate section 3.

More in particular, the rear section 4 consists of a substantially flat or slightly curved section lying on an inclined plane, for example by an angle between 30° and 90°, for example about 60° and 80°, with respect to a horizontal plane.

Furthermore, the front section 2 can extend for a length equivalent to about 10-40% of the sole 1, the intermediate section 3 can extend for a length equal to about 20-80% of the sole 1 and the rear section 4 can extend for a length equal to about 10-40% of the sole 1. If desired, the front section 2 can extend for a length equivalent to about 20-30% of the sole 1, the intermediate section 3 can extend for a length equal to about 50-70% of the sole 1 and the rear section 4 can extend for a length equal to about 10-20% of the sole 1.

The sole 1, can also have two sides 5 rising starting from the sides of the intermediate section 3 and, if desired, even in part of the front section 2. The sides 5 can have a maximum height or length (i.e. the distance of the respective free end from the intermediate section 3) at a median area of the sole and height or length progressively decreasing starting from such area towards the front F and towards the rear R. The sides 5 can be slightly curved with concavity facing towards the internal of the sole 1 or of the respective footwear 8.

The sides 5 can confer the required flexibility to the sole 1.

With reference to the longitudinal extension of the sole 1, it could have several adjacent and subsequent longitudinal strips or portions regarding the intermediate section 3 and, if desired, the whole or part of the front section 2 and/or of the rear section 4. With respect to such aspect, the sole 1 may have three longitudinal strips or portions, i.e. a central strip 6a and two lateral strips 6b, 6c, one opposite to the other with respect to the central strip 6a. In this case, the two lateral strips 6b, 6c could be slightly inclined with respect to the central strip 6a so as to actually wind the area for positioning the user's foot.

The sole 1 could then also comprise stiffening ribs 7, which could for example extend in the intermediate section 3, for example in the portion of intermediate section 3 constituted by one or both lateral strips 6b, 6c, for example the lateral strip 6c which forms the inner side of the sole. The ribs 7 could also extend in the direction from one side to the other of the sole 1 or slightly inclined, for example by about 10°-30° with respect to such direction.

Such sole or part of the sole may have a thickness variable between 0.5 mm and 8 mm, for example equal to about 0.7-0.9 mm or 0.8 mm.

If desired, the sole 1 may have a thickness in the front section 2 and/or in the rear section 4 greater with respect to the remaining parts of the sole, given that greater grip is required in such position.

Regarding this, the points of support of a climbing sole are in the front area and in the rear area of the sole.

The butyl rubber, which is designated to provide greater grip, could thus be provided only at the support points. For this reason, a part of a sole - the one obtained by means of the composition indicated above and not necessarily the entire sole, considering that the latter could also have parts, those at which support is absent during climbing, obtained in a conventional manner or with conventional composition - is also an object of the present invention.

A sole according to the present invention may have a hardness variable between 55 and 95 Shore A, as well as resistance to abrasion variable between 150 and 450 mm² evaluated according to the ISO standards.

Furthermore, it will be observed that being provided for use as a climbing sole, the sole according to the present invention is preferably without spikes, this being due to the fact that spikes would reduce the support surface of the shoe.

Furthermore, the sole may also have means for verifying wear, for example holes or non-through lozenges and with an opening facing towards the external of the sole 1 assembled with the upper and thus towards the external of the footwear 8, which are designated to indicate when sole is excessively worn out. As regards this, the sole could be structured so that if the holes or lozenges are no longer visible, this means that the respective sole is excessively worn out.

In order to obtain a sole 1 according to the present invention, there is obtained a block or mass of non-vulcanized butyl rubber in a pasty state, chewing gum-like which is introduced into a mixer in which there are added other components of the aforementioned composition in the aforementioned proportions and then the mixer is closed and mixed to obtain a composition according to the present invention in a solid or semi-solid state.

At this point, there is obtained or derived a block or piece from the solid or semi-solid having a weight slightly higher than the weight that the final sole should have and such block or piece is inserted into a mould defining an impression with a shape corresponding to the sole to be obtained, and the mould is closed thus obtaining the vulcanisation of the composition and the moulding of the sole. The walls of the mould defining the respective impression are preferably heated, hence guaranteeing the appropriate shaping and vulcanisation.

The times required for executing the method for obtaining a sole according to the present invention vary from 2 to 15 minutes depending on the amount of rubber to be vulcanized, the compound and shape of the sole. The temperatures instead vary from 135°C to 175°C still as a function of the same conditions.

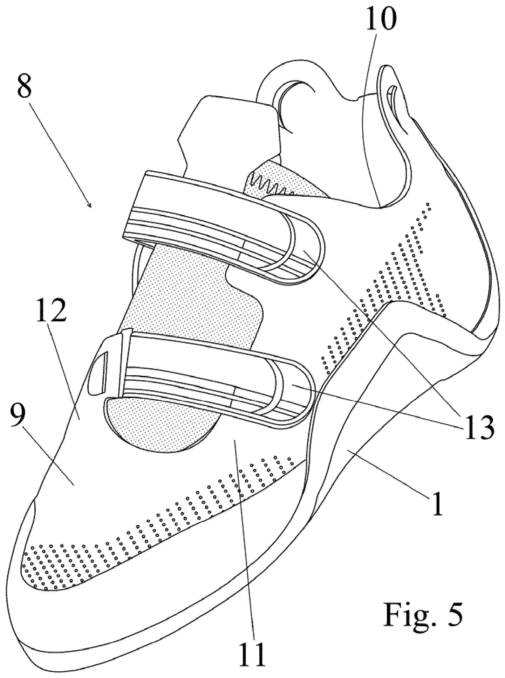

In particular, as regards a footwear or shoe 8 according to the present invention (see figure 5), it comprises an upper 9 as well as a sole 1 as indicated above.

The upper 9 comprises a casing - closed at the bottom part - which is arranged in a housing area HS of the sole 1 and connected to the latter, for example by means of glue, stitching or other suitable means.

The upper 8 then clearly delimits a top opening 10 for inserting the foot and it has flaps 11, 12 closable or releasable by means of special closing means 13, such as bands with Velcro, laces, etcetera.

The body of the upper 8 may be with or without elastic or pulling elements.

As clearly observable, thanks to the composition according to the present invention it is possible to obtain a climbing footwear sole of any shape or dimension and such to have a controlled deformation as well as high structural resistance.

Furthermore, the presence of butyl rubber guarantees high coefficient of friction that cannot be obtained with other types of rubber. Furthermore, thanks to the other components it is possible to avoid that the butyl rubber sticks to the walls of the mould due to the high friction of the butyl rubbers.

Furthermore, considering that the sole is entirely moulded, there are no wastes and thus there is a reduction of the used material by 40-60%, this entailing a cost as well as waste and environmental impact lower than the conventional soles.

In addition, it should be considered that if it is required to add a brand to the sole, thanks to the moulding it is possible to accurately provide it on the outer surface of sole possibly suitably shaping the walls of the mould, while conventional methods require additional steps, but without the possibility of obtaining satisfactory results.

It should also be observed that in conventional shoes, and more in particular in the upper, there are elastic elements that are pulled to confer resistance and rigidity to the upper, before constraining to the sole. With a sole according to the present invention, thanks to the particular configuration thereof, the elastic elements are not required.

Thus, there is obtained a resistant and rigid footwear so as to suitably block the foot and such not to bend during the climbing.

Furthermore, thanks to the present invention there is obtained a qualitative stability of the production not affected by the ability of the involved operators, considering that the sole is obtained thanks to a mould and thus there is no need for cutting and joining various components starting from a single strip.

Furthermore, thanks to a composition according to the present invention, still thanks to the manufacturing in a mould, it is possible to obtain new aesthetic solutions with respect to those proposed up to now.

## Claims

1. Chemical composition or compound comprising the following components:
- butyl rubber in a percentage variable between 45% and 60% by weight of the total weight of the composition;
- carbon black in a percentage variable between 20% and 35% by weight of the total weight of the composition;
- silica in a percentage variable between 8% and 15% by weight of the total weight of the composition;
- dibenzothiazol-2yl disulphide in a percentage variable between 0.02% and 0.06% by weight of the total weight of the composition;
- 3-triethoxysilylpropyl thiocyanate in a percentage variable between 0.5% and 2% by weight of the total weight of the composition;
- a mixture of aliphatic hydrocarbon resins in a percentage variable between 0.03% and 1% by weight of the total weight of the composition,
- fillers added up to obtaining 100% by weight of the total weight of the composition.

2. Composition according to claim 1, wherein said fillers comprise calcium or boron.

3. Use of the composition according to claims 1 or 2 to obtain a climbing footwear sole.

4. Climbing footwear sole or part of a climbing footwear sole obtained in a single piece by means of a moulding step in a mould of a composition according to claim 1 or 2.

5. Sole or part of a sole according to claim 4 having a thickness variable between 0.5 mm and 8 mm.

6. Sole or part of a sole according to claim 4 having a thickness equal to 0.7-0.9 mm.

7. Sole according to claims 4, 5 or 6 comprising from front (F) to rear (R), a substantially flat front section (2), then a slightly curved intermediate section (3) with a concavity facing downwards and lastly a rear section (4) upwardly extending starting from the rear end of the intermediate section (3).

8. Sole according to claim 7, comprising two sides (5) rising from the sides of the intermediate section (3) and having maximum height or length at a median area of the sole and height or length progressively decreasing starting from such area towards the front (F) and towards the rear (R) of the sole.

9. Sole according to any one of claims 4 to 8, comprising means for verifying the wear condition of the sole.

10. Sole according to claim 9, wherein said means for verifying comprise small holes or non-through lozenges with an opening facing towards the exterior of the sole (1).

11. Method for obtaining a climbing footwear sole (1), comprising the following steps:
- providing a block or mass of a non-vulcanized butyl rubber in a pasty state,
- inserting the block in a mixer in which the other elements of the composition of claim 1 or 2 are added in their respective proportions and then mixing until obtaining a composition according to claim 1 or 2 in a solid or semi-solid state,
- obtaining or deriving a block or piece from the solid or semi-solid having a weight slightly higher than the weight that the final sole should have and inserting such block or piece in a mould defining an impression with a shape corresponding to the sole to be obtained,
- closing the mould and moulding the sole in the mould.

12. Method according to claim 11, wherein the walls of the mould defining the respective impression are heated so as to determine the shaping and the vulcanization of the composition.

## Patentansprüche

1. Chemische Zusammensetzung oder Verbindung, umfassend die folgenden Komponenten:
- Butylkautschuk in einem Prozentsatz, der zwischen 45 und 60 Gew.-%, bezogen auf das Gesamtgewicht der Komposition, variabel ist;
- Ruß in einem Prozentsatz, der zwischen 20 und 35 Gew.-%, bezogen auf das Gesamtgewicht der Komposition, variabel ist;
- Kieselsäure in einem Prozentsatz, der zwischen 8 und 15 Gew.-%, bezogen auf das Gesamtgewicht der Komposition, variabel ist;
- Di(benzothiazol-2-yl)disulfid in einem Prozentsatz, der zwischen 0,02 und 0,06 Gew.-%, bezogen auf das Gesamtgewicht der Komposition, variabel ist;
- 3-Triethoxysilylpropyl-thiocyanat in einem Prozentsatz, der zwischen 0,5 und 2 Gew.-%, bezogen auf das Gesamtgewicht der Komposition, variabel ist;
- ein Gemisch aus aliphatischen Kohlenwasserstoffharzen in einem Prozentsatz zwischen 0,03 und 1 Gew.-%, bezogen auf das Gesamtgewicht der Komposition, variabel ist;
- Füllstoffe, die zugesetzt werden, um 100 Gew.-%, bezogen auf das Gesamtgewicht der Komposition, zu erhalten.

2. Zusammensetzung nach Anspruch 1, worin die besagten Füllstoffe Calcium oder Bor umfassen.

3. Verwendung der Zusammensetzung nach Anspruch 1 oder 2, um eine Kletterschuhsohle zu erhalten.

4. Kletterschuhsohle oder Teil einer Kletterschuhsohle, die in einem einzigen Stück mittels eines Formschrittes in einer Form aus einer Zusammensetzung nach Anspruch 1 oder 2 erhalten wird.

5. Sohle oder Teil einer Sohle nach Anspruch 4 mit einer Dicke, die zwischen 0,5 mm und 8 mm variabel ist.

6. Sohle oder Teil einer Sohle nach Anspruch 4 mit einer Dicke, die gleich 0,7-0,9 mm ist.

7. Sohle nach den Ansprüchen 4, 5 oder 6, umfassend von der Vorderseite (F) zur Rückseite (R) einen im Wesentlichen flachen vorderen Abschnitt (2), dann einen leicht gekrümmten Zwischenabschnitt (3) mit einer nach unten gerichteten Konkavität und schließlich einen hinteren Abschnitt (4), der sich beginnend vom hinteren Ende des Zwischenabschnitts (3) nach oben hin erstreckt.

8. Sohle nach Anspruch 7, umfassend zwei Seiten (5), die von den Seiten des Zwischenabschnitts (3) ansteigen und eine maximale Höhe oder Länge in einem mittleren Bereich der Sohle und eine progressiv abnehmende Höhe oder Länge, beginnend von diesem Bereich zur Vorderseite (F) und zur Rückseite (R) der Sohle hin, aufweisen.

9. Sohle nach irgendeinem der Ansprüche 4 bis 8, umfassend Mittel zur Überprüfung des Verschleißzustandes der Sohle.

10. Sohle nach Anspruch 9, worin die besagten Mittel zur Überprüfung kleine Löcher oder nicht-durchgehende Rauten mit einer Öffnung zur Außenseite der Sohle (1) hin umfassen.

11. Verfahren zur Erhaltung einer Kletterschuhsohle, umfassend die folgenden Schritte:
- des Bereitstellens eines Blocks oder einer Masse aus einem nicht-vulkanisierten Butylkautschuk in einem pastösen Zustand,
- des Einsetzens des Blocks in einen Mischer, in dem die anderen Elemente der Zusammensetzung nach Anspruch 1 oder 2 in ihren jeweiligen Anteilen hinzugefügt werden, und dann des Mischens, bis eine Zusammensetzung nach Anspruch 1 oder 2 in einem festen oder halbfesten Zustand erhalten wird,
- des Erhaltens oder Erlangens eines Blocks oder Stücks aus dem Feststoff oder Halbfeststoff mit einem Gewicht, das etwas höher ist als das Gewicht, das die endgültige Sohle haben sollte, und des Einsetzens eines solchen Blocks oder Stücks in eine Form, die einen Abdruck mit einer Form definiert, die der zu erhaltenden Sohle entspricht,
- des Schließens der Form und des Formens der Sohle in der Form.

12. Verfahren nach Anspruch 11, worin die Wände der Form, die den jeweiligen Abdruck definieren, erhitzt werden, um die Formung und die Vulkanisation der Zusammensetzung zu bestimmen.

## Revendications

1. Composition ou composé chimique comprenant les composants suivants :
- butylcaoutchouc dans un pourcentage variable entre 45 % et 60 % en poids du poids total de la composition ;
- noir de carbone dans un pourcentage variable entre 20 % et 35 % en poids du poids total de la composition ;
- silice dans un pourcentage variable entre 8 % et 15 % en poids du poids total de la composition ;
- disulfure de di(benzothiazole-2-yle) dans un pourcentage variable entre 0,02 % et 0,06 % en poids du poids total de la composition ;
- thiocyanate de 3-triéthoxysilylpropyle dans un pourcentage variable entre 0,5 % et 2 % par poids du poids total de la composition ;
- mélange de résines hydrocarbures aliphatiques dans un pourcentage variable entre 0,03 % et 1 % en poids du poids total de la composition,
- charges ajoutées pour obtenir 100 % en poids du poids total de la composition.

2. Composition selon la revendication 1, dans laquelle lesdites charges comprennent du calcium ou du bore.

3. Utilisation de la composition selon la revendication 1 ou 2 pour obtenir une semelle de chausson d'escalade.

4. Semelle de chausson d'escalade ou partie d'une semelle de chausson d'escalade obtenue en une seule pièce grâce à une étape de moulage dans un moule d'une composition selon la revendication 1 ou 2.

5. Semelle ou partie d'une semelle selon la revendication 4, ayant une épaisseur variable entre 0,5 mm et 8 mm.

6. Semelle ou partie d'une semelle selon la revendication 4, ayant une épaisseur égale à 0,7 mm-0,9 mm.

7. Semelle selon la revendication 4, 5 ou 6 comprenant de l'avant (F) vers l'arrière (R), une section frontale (2) sensiblement plate, puis une section intermédiaire (3) légèrement incurvée avec une concavité orientée vers le bas et enfin une section arrière (4) s'étendant vers le haut à partir de l'extrémité arrière de la section intermédiaire(3).

8. Semelle selon la revendication 7, comprenant deux côtés (5) s'élevant depuis les côtés de la section intermédiaire (3) et ayant une hauteur ou une longueur maximale au niveau d'une zone médiane de la semelle et une hauteur ou une longueur diminuant progressivement à partir de ladite zone vers l'avant (F) et vers l'arrière (R) de la semelle.

9. Semelle selon l'une quelconque des revendications 4 à 8, comprenant des moyens pour vérifier l'état d'usure de la semelle.

10. Semelle selon la revendication 9, dans laquelle lesdits moyens de vérification comprennent de petits trous ou des losanges non traversants avec une ouverture orientée vers l'extérieur de la semelle (1).

11. Procédé d'obtention d'une semelle de chausson d'escalade (1), comprenant les étapes suivantes :
- fourniture d'un bloc ou d'une masse de butylcaoutchouc non-vulcanisé dans un état pâteux,
- insertion du bloc dans un malaxeur dans lequel les autres éléments de la composition selon la revendication 1 ou 2 sont ajoutés dans leurs proportions respectives, puis mélange jusqu'à l'obtention d'une composition selon la revendication 1 ou 2 dans un état solide ou semi-solide,
- obtention ou extraction d'un bloc ou d'une pièce solide ou semi-solide ayant un poids légèrement supérieur au poids que la semelle finale devrait avoir et insertion dudit bloc ou de ladite pièce dans un moule définissant une impression avec une forme correspondant à la semelle à obtenir,
- fermeture du moule et moulage de la semelle dans le moule.

12. Procédé selon la revendication 11, dans lequel les parois du moule définissant l'impression respective sont chauffées afin de déterminer la forme et la vulcanisation de la composition.
